# EUROPEAN PATENT SPECIFICATION

(11) **EP 0 560 438 B1**
(45) Date of publication and mention of the grant of the patent: **27.08.1997**
(21) Application number: 93200619.0
(22) Date of filing: 05.03.1993
(51) Int. Cl.: A01K 1/12, A01J 7/00

(54) **A milking machine for automatically milking animals**
Melkmaschine zum automatischen Melken von Tieren
Machine à traire pour le traite automatique d'animaux

(30) Priority: 06.03.1992 NL 9200419
(43) Date of publication of application: 15.09.1993
(73) Proprietor: C. van der Lely N.V., NL-3155 PD Maasland (NL)
(72) Inventor: van der Lely, Cornelis, CH-6300 Zug (CH)
(74) Representative: Mulder, Herman

(56) References cited:
- EP-A- 0 229 682
- EP-A- 0 270 165
- EP-A- 0 306 579
- NL-A- 8 602 505
- US-A- 3 792 686
- US-A- 4 010 714

## Description

The invention relates to a milking machine for automatically milking animals, such as cows, comprising a milking parlour with a floor and a duct in which teat cups are accommodated which are movable in the longitudinal direction of the milking parlour.

Such an implement is known from EP-A-0 229 682. In this implement the teat cups are mounted on supports which are located below the floor. The above mentioned implement has the disadvantage that under the floor there must be formed a pit to accommodate the supports of the teat cups.

The invention has for its object to prevent or at least to minimize the abovementioned disadvantages.

According to the invention this is achieved in that the duct is arranged on the floor.

In accordance with a feature of the invention, the duct is located between the legs of the animal standing in the milking parlour and the teat cups for the milking operation are accommodated in the duct. The distance from the duct to the teats of the animal is reduced thereby. Since the teat cups are already positioned under the animal, the teat cups can be connected to the teats in a relatively short time, which significantly reduces the time of an animal being in the milking parlour. This will increase the output of the milking parlour, so that the farmer can milk more animals in a given period of time.

In order to create an efficient cleaning of the cleaning operation the teat cups can be moved to under the opening in the duct. This significantly reduces the time between cleaning of the teats and the connection of the teat cups to the teats, which increases the output of the milking machine.

For the connection of the teat cups to the teats it is desirable for the teat cups to be movable in the upward direction and also in the lengthwise direction of the milking parlour.

The invention further relates to a milking machine for automatically milking animals, such as cows, comprising a milking parlour and a floor, characterized in that teat cups and a teat cleaner are movably arranged near to each other in the longitudinal direction of the milking parlour.

So as to prevent the milk tubes from becoming damaged, the milking parlour includes, in accordance with the invention, a duct which is mainly closed at the upper side and in which the milk tubes for the discharge of milk are located. Since the milk tubes are protected by the duct, the animal cannot damage the milk tubes and/or vacuum tubes when it enters or leaves the milking parlour. Also during milking of the animal, the tubes are protected from any kicking motions of the animal.

In order to obtain a high grade milk with a low somatic cell count, it is important that milking is effected in hygienic circumstances. To that end it is desirable to clean the teat cups regularly. This should preferably be effected in a location which is protected from dirt and dust. According to the invention, the duct is provided with a space which is covered at the upper side and in which a cleaning implement is arranged, by means of which the teat cups can be cleaned. After milking, the teat cups are uncoupled from the teats and retracted into the duct, whereafter they are moved to the cleaning device to be cleaned.

The duct is provided, in accordance with the invention, with a movable cover, which can close access to the duct. this prevents dirt from entering into the duct when the animal enters or leaves the milking parlour. In this manner the teat cups and the milk tubes are adequately protected. The invention therefore relates to a milking machine for automatically milking animals, such as cows, comprising a milking parlour and a floor, characterized in that the milking parlour includes a duct which is predominantly closed at its upper side and in which milk tubes for discharging milk are accommodated. The duct accommodated in the milking parlour does not only serve as a place for the teat cups and the teat cleaning device, but also serves as a protection of the milking machine from damage caused by the animal's legs.

For a better understanding of the invention and to show how the same may be carried into effect, an embodiment of a milking machine for milking animals, such as cows, comprising a milking parlour will now be described by way of example with reference to the accompanying drawings, in which:
Figure 1 shows a milking parlour provided with an expelling implement, as well as a partly cut-away duct provided in the milking parlour;
Figure 2 is a cross-sectional view of the duct taken on the line II-II in Figure 1;
Figure 3 is a side view of the milking parlour, wherein the teat cups are connected to the teats of an animal present in the milking parlour;
Figure 4 is also a side view of the milking parlour, wherein the teats of the animal are post-treated by means of a disinfecting implement and
Figure 5 is a plan view of the milking parlour.

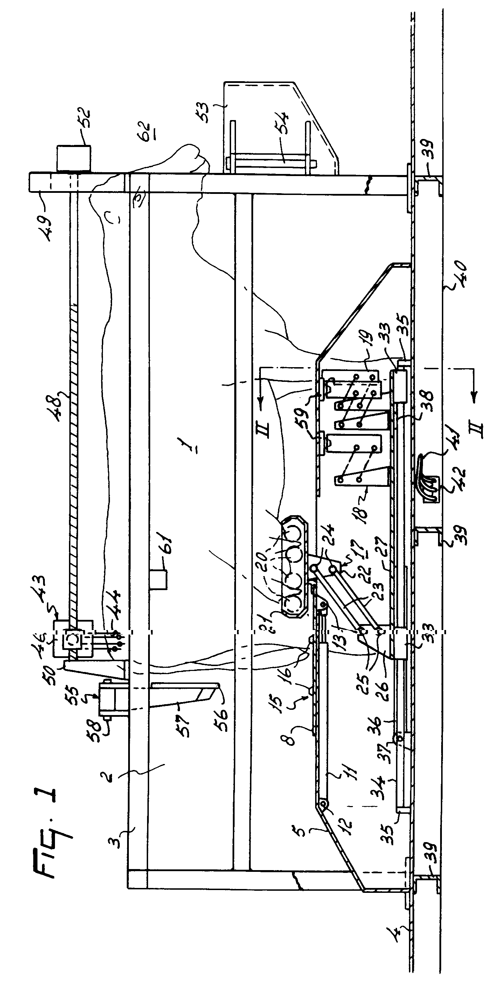

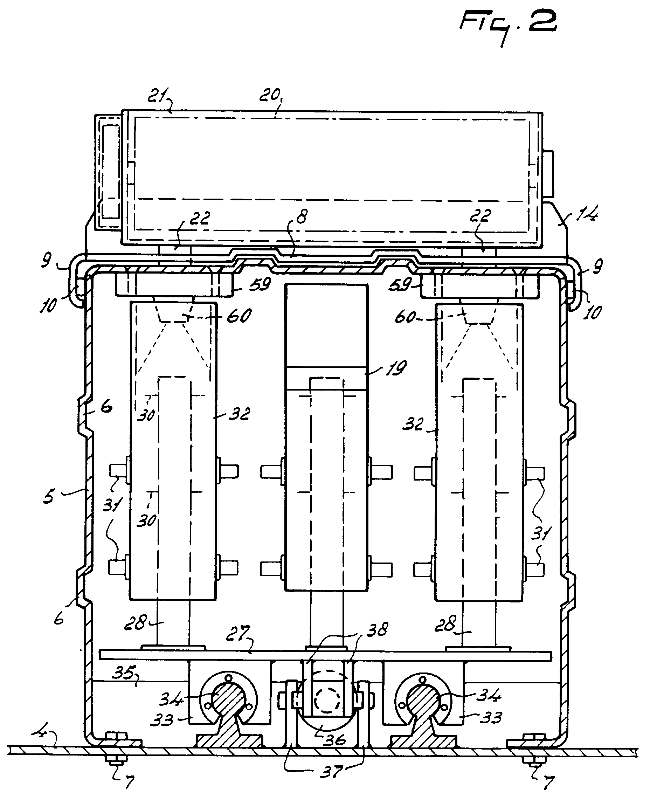

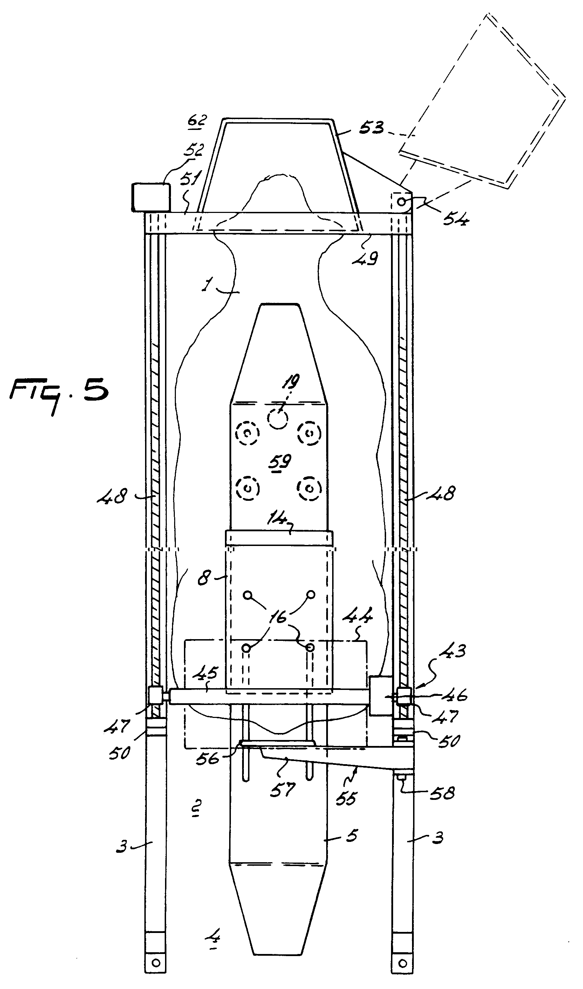

Figure 1 shows in a side elevational view a cow 1 in a milking parlour 2. The milking parlour 2 is surrounded by a railing 3 and has a floor 4. On the floor 4 there is a duct 5 which extends substantially through the overall length of the milking parlour 2. The ends of the duct 5 taper towards the floor 4. Figure 5 shows that the duct 5, taken in the longitudinal direction of the milking parlour 2, is located approximately in the centre plane of the milking parlour 2. In a plan view, the two ends of the duct 5 end in a blunt point. The duct 5 is preferably made of sheet iron provided with a stiffening profile 6 (Figure 2).

Figure 2 is a cross-sectional view of the duct 5, in which it is shown that the walls of the duct 5 are formed by a plate which is folded such as to form a U. The side walls of the duct 5 are provided at the bottom side with a folded-over edge, in which holes are drilled. The duct 5 is bolted to the floor by means of bolts 7 which are inserted through the holes in the folded-over edge. The height and the width of the duct 5 are substantially equal to each other, and amount to approximately 30 cms. It is, however, alternatively possible to choose different dimensions, for example when the duct 5 is used in a milking parlour for, for example, goats.

In the upper wall of the duct 5, near the midway point, there is provided a cover 8 which is movable in the longitudinal direction of the duct 5. The cover 8 extends through the overall width of the duct 5 and, as is shown in Figure 2, has folded-over side edges. The folded-over edge 9 of the cover 8 fits over a strip 10 fastened against the side wall of the duct 5. The strip 10 serves as a guide for the cover 8 which is slidable in the longitudinal direction of milking parlour 2. The strip 10 is preferably made of synthetic resin material. This has the advantage that the friction between the strip 10 and the folded-over metal edge 9 is reduced to a minimum, whilst it is less likely that the animal will hurt itself on the synthetic resin strip 10.

The cover 8 can be moved in the longitudinal direction of the duct 5 by means of a cylinder 11. At one end the cylinder 11 is connected by means of an eye 12 to the interior wall of the duct 5 and the other end is connected by means of an eye 13 to the cover 8. The cylinder 11 may, for example, be a pneumatically or hydraulically operable cylinder. To avoid the possibility that the cow 1 can hurt herself at the leading edge of the cover 8, the leading edge is provided with a rubber shock-absorbing strip 14. The strip 14 also serves as a sealing strip when the cover 8 covers the entrance to the duct 5.

In addition, the cover 8 is provided with a disinfecting implement 15, by means of which the udder and/or teats of the cow 1 can be disinfected. The disinfecting implement 15 comprises four spray heads 16 which are arranged in pairs and remote from each other near the edges of the cover 8. The spray heads 16 move in conjunction with the cover 8 when the operating cylinder 11 of the cover 8 is activated.

The duct 5 accommodates a teat cleaning implement 17, and also a milk cluster 18 and a laser 19. The teat cleaning implement 17 is formed by four profiled rollers 20 which are drivingly supported remote from each other in a container 21. The profiled rollers 20 are driven pairwise and in opposite directions by a motor 22 disposed at the side edge of the container 21. At its bottom side, the container 21 is provided with a support 22, to which two rods 23 are attached in a parallel relationship about horizontal pivot shafts 24. By means of their other ends, the parallel rods 23 are connected capably of pivoting about horizontal shafts 25 to a support 26 accommodated on the bottom plate 27. By means of the parallelogram formed by the rods 23, the teat cleaning implement 17 is movable in height relative to the bottom plate 27. The teat cleaning implement 17 can be moved by means of a cylinder, not shown. The milk cluster 18 is fitted to the bottom plate 27 in a similar manner as the teat cleaning implement 17. To that end, the bottom plate 27 is provided near the two side edges with two supports 28 which are located one after the other on the bottom plate 27. Two parallel and spaced-apart rods 29, which are pivotal about horizontal shafts 30, extend from each support 28. The rods 29 have their other ends connected pivotably about a horizontal shaft 31 to a teat cup 32. In a similar manner as the teat cleaning implement 17, the four teat cups 32 can be moved in height relative to the support 28. The laser 19 is connected to the bottom plate 27 in a similar manner as the teat cups 32. The laser 19 is located in the midway point in front of the two leading teat cups 32. The teat cups 32 are located in front of the teat cleaning implement 17 (taken in the direction from the exit of the milking parlour 2).

It will be obvious that the invention is not limited to the teat cleaning implement 17, milking cluster 18 and laser 19 described in the foregoing, but that it can also be used with other types of teat cleaning implements, milk clusters and detection devices for the determination of the position of the teats of an animal.

In order to provide that after cleaning of the teats by means of the teat cleaning implement 17 the teat cups 32 can be connected to the teats, the teat cups 32 must be moved to under the aperture provided in the duct 5. For that purpose two guide blocks 33 are fitted to the bottom edge of the bottom plate 27, one at each end and remote from each other. The guide blocks 33 bear on two rails 34 extending in the longitudinal direction of the milking parlour 2 on the floor 4. The two rails 34 are provided at their ends with shock absorber plates 35 which constitute the boundary for the guide blocks 33 which are slidable over the rails. The bottom plate 27 can be moved by means of a cylinder 36 in the longitudinal direction of the milking parlour 2 over the rails 34. For that purpose, the cylinder 36 has one end connected to the floor 4 by means of a connecting lug 37, whilst its other end is connected to the bottom plate 27 by means of a further connecting lug 38. The connecting lug 38 is disposed at the bottom side and near the leading edge of the bottom plate 27.

A cleaning implement 59, by means of which the teat cups 32 can be cleaned, are arranged near the leading side of the duct 5 against the upper wall. The cleaning implement 59 comprises four spaced-apart spray heads 60, along which cleaning solution can be sprayed in and/or along the teat cups 32.

The floor 4 is supported by U-beams 39 which are mounted transversely to the longitudinal direction of the milking parlour 2 under the floor 4. The U-beams 39 bear on the bottom 40 of the milking parlour 2. Lines 41, such as milk lines, vacuum lines, rinsing liquid lines etc., are located in the space between the floor 4 and the bottom 40. The lines 41 lead through an aperture, not shown in the drawing, in the floor 4 to the teat cleaning device 17, teat cups 18, cleaning implement 59 and disinfecting implement 15. At the edge of the milking parlour 2, the lines 41 end in a multiple panel 42 which is provided with quick-action couplings for supply lines.

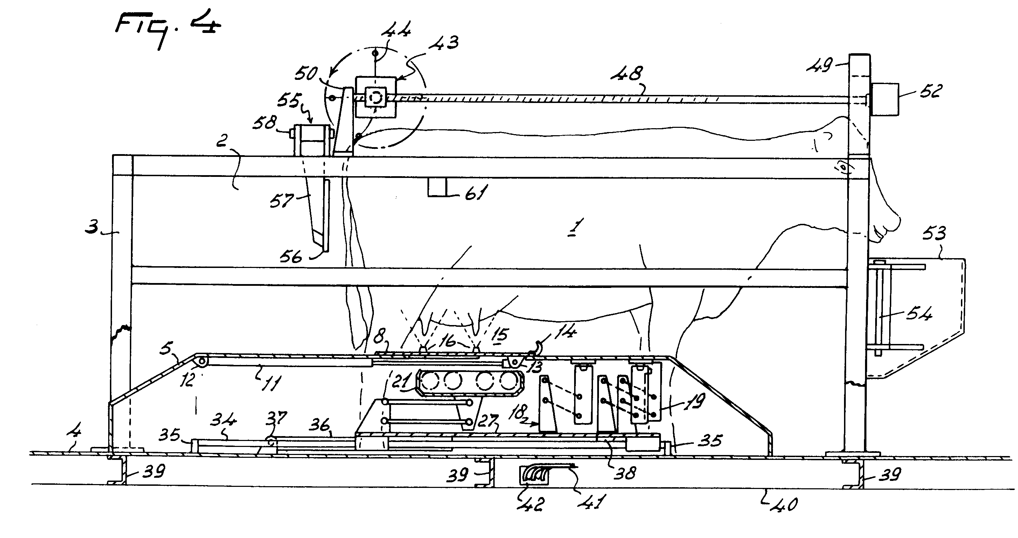

An expelling implement 43, by means of which the cow 1 can be removed from the milking parlour 2, is disposed near the upper side of the railing 3 transversely to the longitudinal direction of the milking parlour 2. As is shown in Figures 4 and 5, the cow expelling implement 43 is formed by whip members 44 which are rotatable about a horizontal shaft. The whip members 44 are fitted on a shaft 45, which shaft 45 is supported at both ends in bearings. The bearings are each accommodated in a housing 47. Near one of the housings 47, a motor 46 is disposed which can cause the horizontal shaft 45 to rotate. The whip members 44 can, for example, be made of leather thongs having at their ends a knot or flexible plastics material rods. The whip members 44 can be mounted such on the shaft 45 that they extend through the overall width of the milking parlour 2, but alternatively through a portion of the shaft 45. The housings 47 are movable along two stubs 48, these stubs being disposed one on each side edge of the railing 3. The stubs 48 have their ends rotatably supported in leading supports 49 and trailing supports 50. The leading supports 49 are disposed on the two leading ends of the railing 3. The trailing supports 50 are disposed at approximately 1/4 of the length of the milking parlour 2, taken in the direction from the rear side of the railing 3. At the front side of the milking parlour 2, a transmission 51 which interconnects the two stubs 48 is arranged between the stubs 48. Each of the leading supports 49 is provided with a motor 52 which can induce the stubs 48 to rotate. As the housings 47 are internally provided with thread, which engages the threaded ends 48, the housings 47 will be moved during rotation of the threaded ends 48 in the longitudinal direction of the milking parlour 2. The trailing supports 50 and the leading supports 49 constitute a stop for the housings 47, which are movable in the longitudinal direction of the milking parlour 2. The railing 3 is furthermore provided with a telemeter 61, by means of which it can be determined whether the cow 1 has left the milking parlour 2. By means of the telemeter 61 it is also possible to measure the distance to the cow 1, which data can be used to control the expelling device 43 (the shaft 45 carrying the whip members 44 can, if necessary, be brought up to the cow 1, if, for example, the cow stops halfway on leaving the milking parlour 2). The telemeter 61 may, for example, be an ultrasonic sensor, a light cell or a laser.

In addition, the leading side of the milking parlour 2 is provided with an exit door 62, to which a feed trough 53 is rigidly connected. The exit door 62 is pivotal about a vertical pivot shaft 54 located near the corner pole of the railing 3.

Disposed near the trailing support 50 is a retaining member 55, by means of which the cow 1 can be enclosed between the exit door 62 and the retaining member 45. The retaining member 55 comprises a plate 56 located in a vertical plane transversely to the longitudinal direction of the milking parlour 2 behind the cow 1 and in the centre of the milking parlour 2. The plate 56 measures approximately 50 by 50 cms. An arm 57, which extends obliquely upwardly to above the railing 3, is disposed at the rear side of the plate 56. The end of the arm 57 is pivotal about a horizontal shaft 58 extending in the longitudinal direction of the milking parlour 2. The horizontal shaft 58 is clamped between two strips which are fastened in the vertical direction on the railing 3. The plate 56 can be swung away in the vertical direction of the milking parlour 2 about the horizontal shaft 58 by means of a cylinder, not shown in the drawing.

The implement is further provided with a computer, not shown, by which the cylinders, motors, sensors, and automatic feeder of the implement can be controlled.

The above-described implement operates as follows:

Before the cow 1 enters the milking parlour, the retaining member 55 is hinged upwards, allowing free access to the milking parlour 2. The aperture in the duct 5 is closed by means of the cover 8. The cow 1 enters the milking parlour 2 and walks to as far as the exit door 62, where the cow 1 is fed via the feed trough 53. Thereafter the plate 56 is swivel led to behind the cow 1. As a result thereof, the cow 1 is bounded at its front side by the exit door 62 and at its rear side by the retaining member 55, while the railing 3 bounds the cow 1 on both sides. At the bottom side, the duct 5 forces the legs of the cow 1 to a certain spread position.

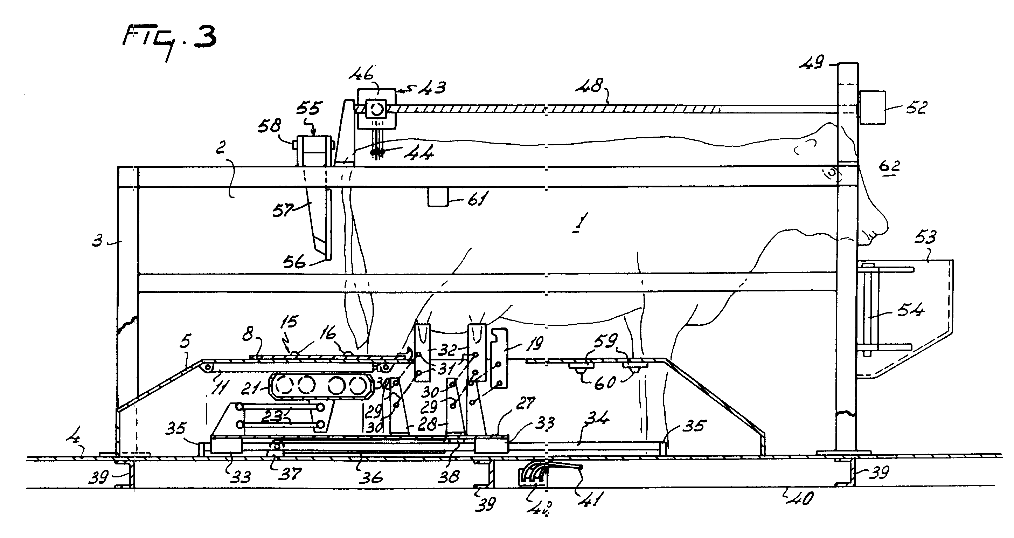

After the cow 1 has been supplied with fodder, the cover 8 is slid to the rear by energizing the cylinder 11, so that the aperture in the duct 5 is opened. Thereafter, as is shown in Figure 1, the teat cleaner 17 is moved to the teats of the cow 1 and the teats are cleaned by the profiled rollers 20. After the teats have been adequately cleaned, the teat cleaner 17 is retracted in the duct 5. Thereafter the cylinder 36 is energized and the bottom plate 27 is pulled to the rear over the rails 34. This causes the milk cluster 18 and also the laser 19 to be moved under the aperture in the duct 5. The laser 19 is raised through the aperture in the duct 5 and thereafter the position of the teats is determined by the laser 19. As soon as the teats have been located, the teat cups 32 are moved to the teats and connected thereto (Figure 3). After the milking operation has ended, the teat cups 32 are withdrawn into the duct 5 and the cover 8 is moved forwards by activation of cylinder 11, so that the aperture in the duct 5 is closed. By energizing the cylinder 36, the teat cups 32 are moved forwards to under the teat cup cleaner. Thereafter the teat cups 32 are connected to the spray heads 60 of the cleaning implement 59 and are rinsed thereby until they are clean.

After the milking has ended, the teats of the cow 1 are sprayed with an disinfectant by the disinfecting implement 15 mounted on the cover 8. Thereafter the exit door 62 is pivoted away by a cylinder, not shown, about the vertical shaft 54, so that the exit of the milking parlour 2 is opened. So the cow 1 can voluntarily leave the milking parlour 2. By means of the telemeter it is checked whether the cow 1 indeed leaves the milking parlour 2. Should this not be the case, then the expelling implement 43 is activated. The motor 46 then drives the horizontal shaft 45, so that the whip members 44 start hitting the cow 1 on her back. By means of the telemeter 61 it is checked whether the cow 1 leaves the milking parlour 2 completely. Should it be that the cow 1 stops, for example halfway, this is reported by the telemeter 61 and the motor 52 is started, whereafter the expelling implement 43 is moved up to the cow 1 until the whip members 44 hit the cow 1. This is continued until the cow 1 has left the milking parlour 2. After the cow 1 has left the milking parlour 2, the exit door 62 closes the exit and the expelling implement 43 is returned to the rearmost supports 50 and the plate 56 is pivoted upwardly. The milking parlour 2 is thereafter ready to receive a subsequent animal.

## Claims

1. A milking machine for automatically milking animals, such as cows, comprising a milking parlour (2), with a floor (4) and a duct (5) in which teat cups (32) are accommodated which are movable in the longitudinal direction of the milking parlour (2), characterized in that the duct (5) is arranged on the floor (4).

2. A milking machine as claimed in claim 1, characterized in that the duct (5) accommodates a teat cleaner (17) which is movably arranged in the longitudinal direction of the milking parlour (2).

3. A milking machine as claimed in claim 1 or 2, characterized in that in the duct (5) there are accommodated milk tubes (41) for discharging milk.

4. A milking machine as claimed in any one of the preceding claims, characterized in that in the duct (5) there is provided a space which is covered at the top and in which teat cups (32) are cleanable in a cleaning implement (59).

5. A milking machine as claimed in any one of the preceding claims, characterized in that a milk cluster (18) is present in the duct (5), as well as milk and vacuum tubes (41) for the milk cluster (18).

6. A milking machine as claimed in claim 5, characterized in that the duct (5) is fitted with a movable cover (8) which can close the duct (5).

7. A milking machine as claimed in claim 6, characterized in that the cover (8) comprises a disinfecting implement (15) for disinfecting the udder and/or the teats.

8. A milking machine as claimed in any one of the preceding claims, characterized in that teat cups (32) and a teat cleaner (17), as well as a teat cup cleaning implement (59) are present in the duct (5).

9. A milking machine as claimed in any one of the preceding claims, characterized in that the milking parlour (2) is provided with an expelling device (43), such as a rotating whip, for removing an animal (1) from the milking parlour (2).

10. A milking machine as claimed in claim 9, characterized in that the rotating whip includes members (44) which because of centrifugal force assume a radially outwardly extending position.

11. A milking machine as claimed in any one of the preceding claims, characterized in that in or near the milking parlour (2) a measuring device (61) is accommodated, by means of which it is checked whether an animal leaves the milking parlour (2).

12. A milking machine as claimed in any one of the preceding claims, characterized in that the expelling implement (43) is movable in the longitudinal direction of the milking parlour (2).

13. A milking machine as claimed in any one of the preceding claims, characterized in that milk and vacuum tubes (41) are present between the bottom of the duct (5) and the floor (4) of the milking parlour (2).

14. A milking machine as claimed in any one of the preceding claims, characterized in that the duct (5) has a width of approximately 30 cms, a height of approximately 30 cms, and a length of approximately 120 cms.

15. A milking machine as claimed in any one of the preceding claims, characterized in that a feed trough (53) is disposed at one end of the milking box (2), whilst at another end a retaining member (55) for positioning the animal is located, which feed trough (53) and retaining member (55) can be moved out of the way, whereby the exit, or the entrance, respectively, of the box (2) is accessible to an animal (1).

16. A milking machine as claimed in any one of the preceding claims, characterized in that the tunnel (5) has obliquely extending walls at both ends.

## Patentansprüche

1. Melkmaschine zum automatischen Melken von Tieren, z. B. von Kühen, die eine Melkstand (2) mit einem Boden (4) und einem Tunnel (5) aufweist, in welchem in Längsrichtung des Melkstandes (2) bewegbare Zitzenbecher (32) angeordnet sind,
dadurch gekennzeichnet, daß der Tunnel (5) auf dem Boden (4) angeordnet ist.

2. Melkmaschine nach Anspruch 1,
dadurch gekennzeichnet, daß in dem Tunnel (5) ein Zitzenreiniger (17) angeordnet ist, der in Längsrichtung des Melkstandes (2) bewegbar ist.

3. Melkmaschine nach Anspruch 1 oder 2,
dadurch gekennzeichnet, daß in dem Tunnel (5) Milchleitungen (41) zum Abführen von Milch angeordnet sind.

4. Melkmaschine nach einem der vorhergehenden Ansprüche,
dadurch gekennzeichnet, daß in dem Tunnel (5) ein oben abgedeckter Raum vorhanden ist, in welchem Zitzenbecher (32) von einer Reinigungsvorrichtung (59) zu reinigen sind.

5. Melkmaschine nach einem der vorhergehenden Ansprüche,
dadurch gekennzeichnet, daß in dem Tunnel (5) ein Melkgeschirr (18) sowie Milch- und Vakuumleitungen (41) für das Melkgeschirr (18) vorhanden sind.

6. Melkmaschine nach Anspruch 5,
dadurch gekennzeichnet, daß der Tunnel (5) mit einem abnehmbaren Deckel (8) versehen ist, mit dem der Tunnel (5) zu verschließen ist.

7. Melkmaschine nach Anspruch 6,
dadurch gekennzeichnet, daß der Deckel (8) eine Desinfektionsvorrichtung (15) zum Desinfizieren des Euters und/oder der Zitzen aufweist.

8. Melkmaschine nach einem der vorhergehenden Ansprüche,
dadurch gekennzeichnet, daß in dem Tunnel (5) Zitzenbecher (32) und ein Zitzenreiniger (17) sowie eine Zitzenbecher-Reinigungsvorrichtung (59) angeordnet sind.

9. Melkmaschine nach einem der vorhergehenden Ansprüche,
dadurch gekennzeichnet, daß der Melkstand (2) mit einer Austreibevorrichtung (43) wie z. B. einer rotierenden Peitsche zum Austreiben eines Tieres (1) aus dem Melkstand (2) versehen ist.

10. Melkmaschine nach Anspruch 9,
dadurch gekennzeichnet, daß die rotierende Peitsche Glieder (44) aufweist, die aufgrund der Zentrifugalkraft eine radial nach außen gerichtete Lage einnehmen.

11. Melkmaschine nach einem der vorhergehenden Ansprüche,
dadurch gekennzeichnet, daß in oder nahe dem Melkstand (2) eine Überwachungseinrichtung (61) angeordnet ist, mit der überwacht wird, ob ein Tier den Melkstand (2) verläßt.

12. Melkmaschine nach einem der vorhergehenden Ansprüche,
dadurch gekennzeichnet, daß die Austreibevorrichtung (43) in Längsrichtung des Melkstandes (2) bewegbar ist.

13. Melkmaschine nach einem der vorhergehenden Ansprüche,
dadurch gekennzeichnet, daß die Milch- und Vakuumleitungen (41) zwischen dem Boden des Tunnels (5) und dem Boden (4) des Melkstandes (2) angeordnet sind.

14. Melkmaschine nach einem der vorhergehenden Ansprüche,
dadurch gekennzeichnet, daß der Tunnel (5) etwa 30 cm breit, 30 cm hoch und 120 cm lang ist.

15. Melkmaschine nach einem der vorhergehenden Ansprüche,
dadurch gekennzeichnet, daß an dem einen Ende der Melkbox (2) ein Futtertrog (53) und an dem anderen Ende ein Halteelement (55) zum Positionieren des Tieres angeordnet ist, wobei der Futtertrog (53) und das Halteelement (55) wegzubewegen sind, so daß der Ausgang bzw. der Eingang der Box (2) für ein Tier (1) freigegeben ist.

16. Melkmaschine nach einem der vorhergehenden Ansprüche,
dadurch gekennzeichnet, daß der Tunnel (5) an beiden Enden schräg verlaufende Wände hat.

## Revendications

1. Machine à traire pour la traite automatique d'animaux tels que des vaches, comprenant une stalle de traite (2) avec un plancher (4) et un conduit (5) dans lequel sont logés des godets de trayons (32) qui sont mobiles dans le sens longitudinal de la stalle de traite (2),
**caractérisée** en ce que le conduit (5) est disposé sur le plancher (4).

2. Machine à traire selon la revendication 1, caractérisée en ce que le conduit (5) contient un dispositif de nettoyage (17) pour les trayons, qui est disposé de manière à être mobile dans le sens longitudinal de la stalle de traite (2).

3. Machine à traire selon la revendication 1 ou 2, caractérisée en ce que des tuyaux à lait (41) pour évacuer le lait sont disposés dans le conduit (5).

4. Machine à traire selon l'une quelconque des revendications précédentes, caractérisée en ce qu'il est prévu dans le conduit (5) un espace qui est couvert à sa partie supérieure et dans lequel des godets de trayons (32) peuvent être nettoyés dans un dispositif de nettoyage (59).

5. Machine à traire selon l'une quelconque des revendications précédentes, caractérisée en ce qu'un groupe de traite (18) est disposé dans le conduit (5), ainsi que des tuyaux à lait et à vide (41) pour le groupe de traite (18).

6. Machine à traire selon la revendication 5, caractérisée en ce que le conduit (5) est équipé d'un couvercle mobile (8) qui peut obturer le conduit (5).

7. Machine à traire selon la revendication 6, caractérisée en ce que le couvercle (8) comprend un dispositif de désinfection (15) pour désinfecter le pis et/ou les trayons.

8. Machine à traire selon l'une quelconque des revendications précédentes, caractérisée en ce que des godets de trayons (32) et un dispositif (17) de nettoyage des trayons, ainsi qu'un dispositif (59) de nettoyage des godets de trayons, sont présents dans le conduit (5).

9. Machine à traire selon l'une quelconque des revendications précédentes, caractérisée en ce que la stalle de traite (2) est munie d'un dispositif expulseur (43), tel qu'un fouet rotatif, pour faire sortir un animal (1) de la stalle de traite (2).

10. Machine à traire selon la revendication 9, caractérisée en ce que le fouet rotatif comporte des organes (44) qui prennent, à cause de la force centrifuge, une position s'étendant radialement vers l'extérieur.

11. Machine à traire selon l'une quelconque des revendications précédentes, caractérisée en ce qu'un dispositif de mesure (61) est logé dans la stalle de traite (2) ou près de celle-ci, au moyen duquel on vérifie si un animal sort de la stalle de traite (2).

12. Machine à traire selon l'une quelconque des revendications précédentes, caractérisée en ce que le dispositif expulseur (43) est mobile dans le sens longitudinal de la stalle de traite (2).

13. Machine à traire selon l'une quelconque des revendications précédentes, caractérisée en ce que des tuyaux à lait et à vide (41) sont présents entre le fond du conduit (5) et le plancher (4) de la stalle de traite (2).

14. Machine à traire selon l'une quelconque des revendications précédentes, caractérisée en ce que le conduit (5) a une largeur d'environ 30 cm, une hauteur d'environ 30 cm, et une longueur d'environ 120 cm.

15. Machine à traire selon l'une quelconque des revendications précédentes, caractérisée en ce qu'une mangeoire (53) est disposée à une extrémité de la stalle de traite (2), tandis qu'un organe de retenue (55) pour positionner l'animal est situé à l'autre extrémité, laquelle mangeoire (53) et lequel organe de retenue (55) peuvent être écartés pour dégager un passage, ce qui rend respectivement la sortie ou l'entrée de la stalle (2) accessible à un animal (1).

16. Machine à traire selon l'une quelconque des revendications précédentes, caractérisée en ce que le tunnel (5) a des parois qui s'étendent en oblique à ses deux extrémités.
